# EUROPÄISCHE PATENTANMELDUNG

(11) **EP 0 579 917 A2**
(43) Veröffentlichungstag der Anmeldung: **26.01.1994**
(21) Anmeldenummer: 93107538.6
(22) Anmeldetag: 10.05.1993
(51) Int. Cl.: H05B 6/68, G05D 23/19, F24C 7/08

(54) **Steuereinrichtung für ein verschliessbares Gargerät**

(30) Priorität: 17.07.1992 DE 4223654
(71) Anmelder: BOSCH-SIEMENS HAUSGERÄTE GmbH, D-81669 München (DE)
(72) Erfinder: Has, Uwe, Dipl.-Ing., D-84419 Schwindegg (DE); Plankl, Manfred, Dipl.-Ing., W-8357 Wallersdorf (DE); Zschau, Günter, Dipl.-Ing. (FH), W-8226 Altenmarkt (DE)

(57) **Zusammenfassung**

Die Erfindung bezieht sich auf eine Steuereinrichtung für ein verschließbares Gargerät mit einer Heizeinrichtung zur Beheizung des Garraumes, wobei die Heizeinrichtung mit einer durch einen Temperatursensor gesteuerten Regeleinrichtung für einen festlegbaren Temperaturbereich zusammenwirkt, daß der zur Onlineoptimierung eines festlegbaren Garraum-Temperaturbereichs bis zu 100°C, die Regeleinrichtung den Einschwingzustand für den Temperaturanfangswert Fuzzy steuert, so daß mit bereits einem Fuzzy-Regelschritt die Anheizspitze vermieden wird, die Regeleinrichtung den abgeklungenen Einschwingzustand erkennt und eine auf den ersten Fuzzy-Regelschritt bezogene, optimierte Heizzeit initialisiert, die Regeleinrichtung bei minimaler Heizzeit unter ständiger Überwachung der optimalen Einschalttemperatur für die Garraumheizung aus dem erkannten jeweiligen Temperaturgradienten die minimale Heizzeit aktualisiert und daß die Regeleinrichtung über einen geschlossenen Regelkreis die Einschalttemperatur ständig optimiert.

## Beschreibung

Die Erfindung bezieht sich auf eine Steuereinrichtung für ein verschließbares Gargerät mit einer Heizeinrichtung zur Beheizung des Garraumes, wobei die Heizeinrichtung mit einer durch einen Temperatursensor gesteuerten Regeleinrichtung für einen festlegbaren Temperaturbereich zusammenwirkt.

Steuereinrichtungen von Garungsvorgängen in Backherden sind insoweit bekannt und auch als sensorgesteuerte Schaltungseinrichtung vorhanden. Es ist üblich, Vorrichtungen zu benutzen, die zum Steuern des Gar- bzw. Koch- und Bratvorganges dienlich sind, bei denen die Temperatur und die Abgaszusammensetzung sensorgesteuert erfaßt werden. Die aus diesen Regelgrößen gewonnenen Steuersignale werden in Koch-, Gar-, Bratautomatiken ausgewertet.

Aufgabe der Erfindung ist es, eine Steuereinrichtung für Gar-, Brat- und Kochvorgänge zu entwickeln die eine Onlin e-Optimierung eines festlegbaren Garraum-Temperaturbereichs bis zu 100°C realisiert.

Die Erfindung löst diese Aufgabe dadurch, daß zur Online-Optimierung eines festlegbaren Garraum-Temperaturbereiches bis zu 100°C, die Regeleinrichtung den Einschwingzustand für den Temperatur-Anfangswert Fuzzy steuert, so daß mit bereits einem Fuzzy-Regelschritt die Anheizspitze vermieden wird, die Regeleinrichtung den abgeklungenen Einschwingzustand erkennt und eine auf den ersten Fuzzy-Regelschritt bezogene optimierte Heizzeit initialisiert, die Regeleinrichtung bei minimaler Heizzeit unter ständiger Überwachung der optimalen Einschalttemperatur für die Garraumheizung aus den erkannten jeweiligen Temperaturgradienten die minimale Heizzeit aktualisiert und daß die Regeleinrichtung über einen geschlossenen Regelkreis die Einschalttemperatur ständig optimiert. Eine weitere vorteilhafte Ausgestaltung der Erfindung ist dadurch gekennzeichnet, daß eine Anwahlschaltung mit einem Fuzzy-Steuerblock verbunden ist, wobei der Fuzzy-Steuerblock mit einer zentralen Steuerung korrespondiert, die je nach Einschwingzustand des Temperaturanfangswertes die Heizung zu- oder abschaltet.

Weitere vorteilhafte Ausgestaltungen der Erfindung sind in den Unteransprüchen enthalten. Ein Ausführungsbeispiel nach der Erfindung ist im folgenden anhand der Zeichnung näher beschrieben. Es zeigt:
- Fig. 1: ein Regeldiagramm der Temperatur als Funktion der Zeit für bisherige Regelungen,
- Fig. 2: ein Regeldiagramm die Temperatur als Funktion der Zeit für die erfindungsgemäße Regelung,
- Fig. 3: ein Regelschema für die vorgeschlagene Regelung,
- Fig. 4: ein Schaltungsbeispiel für die vorgeschlagene Regelung.

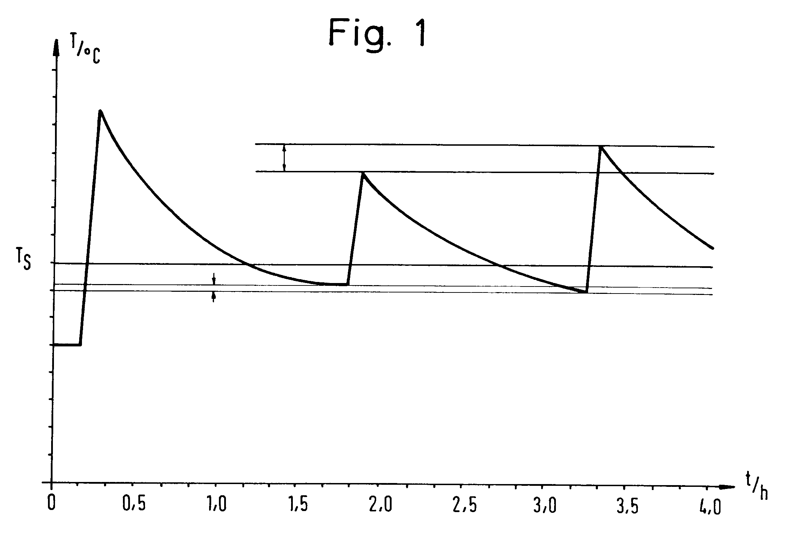

Gemäß Fig. 1 wird die Temperatur im Backofenschwerpunkt in Abhängigkeit über die Heizzeit dargestellt. Das aufgezeigte Diagramm kennzeichnet das Verhalten der gegenwärtigen Regelung. Üblicherweise wird die Temperatur in einem Backofen durch einen Wärmefühler erfaßt. Aufgrund des Signales dieses Wärmefühlers wird die Heizung des Backofens mit einer systembedingen Hysterese ein- und ausgeschaltet. Der Backofen stellt aus regelungstechnischer Sicht ein relativ träges System dar. Diesbezüglich ist es unter Anwendung einfacher Zweipunktregelung nicht möglich, die Temperatur dem Sollwert entsprechend einzuhalten. Das Diagramm gemäß Fig. 1 zeigt vielmehr deutliche Über- und Unterschwinger um den Sollwert. Aus garungstechnischer Sicht ist das generell nicht nur negativ, jedoch für die der Aufgabenstellung entprechende Temperaturbereiche ist im allgemeinen eine bessere Konstanz vonnöten. Nahrungsmittel, die gemäß ihrer Zubereitung bzw. temperaturtechnischen Aufbereitung als empfindlich gelten, d.h. bei Überschreiten von beispielsweise 40°C Gebrauchswert, Geschmackswert und anderer Verwendungsfähigkeit erheblich einbüßen, sollten daher nur geringen Schwankungen der Temperatur ausgesetzt sein. Dies betrifft beispielsweise das Trocknen von zartem Obst, Pilzen oder Gemüse; das Herstellen von Joghurt-Kulturen, das Fermentieren von Tee, das Darren von Hopfen, das Gehenlassen von Hefeteig und andere Tätigkeiten mehr.

Gemäß Fig. 1 ist zu dem erkennbar, daß das Einschwingverhalten insbesondere kritisch ist, bzw. im allgemeinen der Ausschaltpunkt für die Garraumheizung starke Überhöhungen des Temperaturwertes vom vorgegebenen Sollwert auslösen. Die Bandbreite für das Einschalten der Heizung hingegen ist diesbezüglich etwas unkritischer.

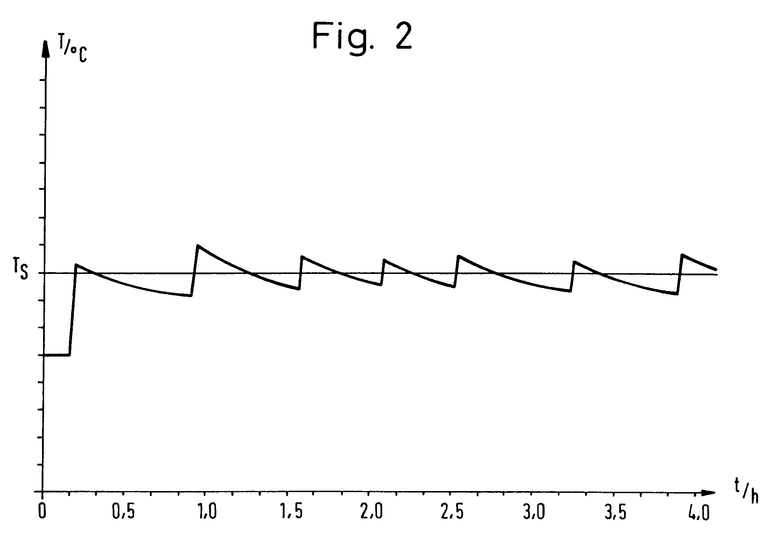

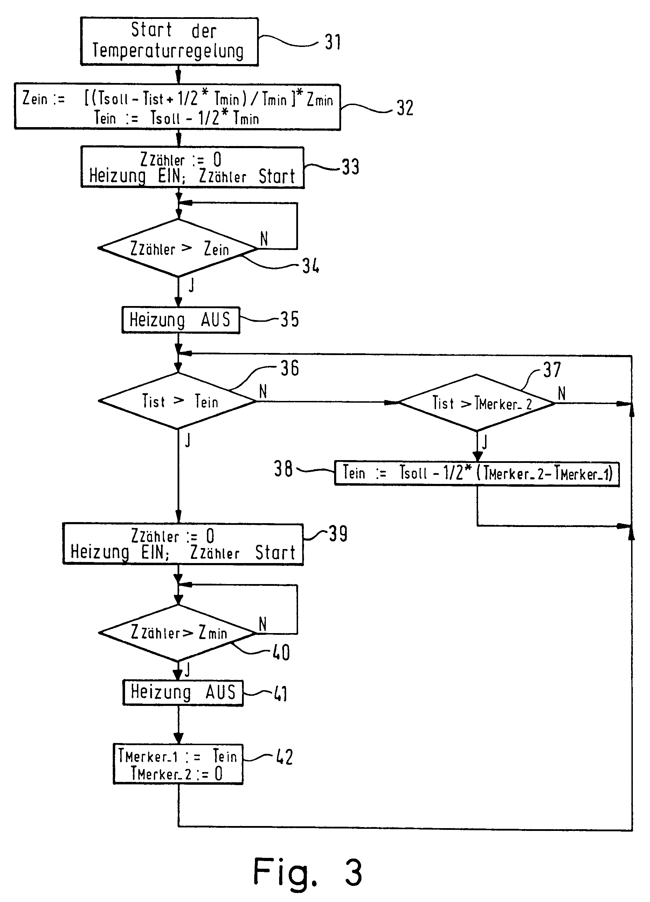

Fig. 2 zeigt eine mögliche iterative, gargut-verträglichere Temperaturverlaufs-Annäherung an einen vorgegebenen Sollwert. Die gemäß Fig. 2 angegebene Regelkurve entspricht der vorgeschlagenen Regelung beim Niedrigtemperatur-Garen. Die Temperatur zum Einschaltzeitpunkt ist genau bekannt. Da die Eigenschaften des Herdes, Trägheit des Systems und angewendete Heizleistung, ebenso bekannt sind, kann abgeschätzt werden, wielange der Herd heizen muß, um auf die gewünschte Solltemperatur zu kommen. Es ist zunächst nicht nötig, das Erreichen dieser Solltemperatur bei vorgeschätzter Heizdauer durch eine exakte Messung zu bestätigen. Wenn die vorausgeschätzte Heizzeit verstrichen ist, dann wird die Heizung abgeschaltet. Danach kann der Herd ohne Zuheizen ca. 5 bis 10 Minuten Temperatur-Ausgleichszeit abwarten, bis sich der Temperaturfühler auf die neue Backofentemperatur eingeschwungen hat. Während dieser Einschwingdauer ist mit Überraschungen in Bezug auf die Herdtemperatur kaum zu rechnen, daher stört die Trägheit des Herdsystems nicht. Abhängig vom Ergebnis dieser zweiten Messung, mit der das Erreichen der Solltemperatur kontrolliert wird, können die aktuellen Parameter des Herdes abgeschätzt und ggf. korrigiert werden. Dabei ist zu beachten, daß die Einschaltzeit minimal sein soll, da die Dauer der Einschaltzeit die großen Überschwingungen gemäß Fig. 1 bedingt. Die minimale Einschaltzeit ist für größere Lasten durch eine den VDE-Vorschriften entsprechende DIN-Norm vorgegeben. Diese sogenannte Knackrate gestattet eine Schalthäufigkeit von ein bis zwei Schaltvorgängen pro Minute. Unter optimaler Ausnützung dieser zulässigen Knackrate könnte die Temperatur im Schwerpunkt des Backofens weit genauer als bisher geregelt werden. Gemäß Fig. 3 wird ein Temperatur-Regelungsverfahren in Form eines Regel-Schematas dargestellt. Mit Hilfe der Regel-Verfahrensschritte 31 bis 42 kann eine Niedrigtemperaturregelung für Herde aufgebaut werden. Zum Verständnis der angegebenen Verfahrensschritte 31 bis 42 werden folgende Definitionen vorangestellt:

Abkürzungen für Temperaturen (Txxx):
- Tsoll:: = Temperatur, auf der der Herd gehalten werden soll. Vorgabe des Benutzers
- Tist:: = Temperatur, die aktuell im Herd herrscht.
- Tmin:: = Minimale Temperaturerhöhung, die durch Beheizen des Herdes während einer Zeit Zmin erreicht wird ( Zmin ist damit indirekt durch die zulässige Knackrate vorgegeben).
- Tein:: = Temperatur, bei der die Temperaturregelung die Herdheizung einschaltet. Diese Temperatur wird zuerst aus einer "Tabelle" oder "Herd-Kennlinie" bestimmt und dann fortlaufend neu optimiert.
- Tmerk-1:: = Merker für Temperaturen; dieser Merker wird für die Online-Opti mierung der Einschalttemperatur ein der Heizung benötigt.
- Tmerk-2:: = Merker für Temperaturen; dieser Merker wird für die Online-Optimierung der Einschalttemperatur ein der Heizung benötigt.

Abkürzung für Zeiten (Zxxx):
- Zmin:: = minimale Zeit, während der der Herd minimal beheizt werden darf; sie wird (als Knackrate) durch den el. Anschlußwert der Herdheizung vorgegeben. Zmin wird als Vorgabe im Prozessor der Regelung abgelegt und während des Regelprozesses entsprechend der aktuellen Gegebenheiten (Eigenheiten des Herdes, Netzspannung, usw.) optimiert.
- Zein: : = Zeit des ersten Einheizens des Herdes; während dieser Zeit soll die sonst übliche "Anheizspitze" vermieden werden.
- Zzähler:: = Zeitzähler, mit dem die minimale Einschaltzeit der Heizung überwacht wird.

Durch den Verfahrensschritt 31 wird der Start der Temperaturregelung insbesondere mit Angabe der jeweiligen Niedrigtemperatur ausgelöst. Verfahrensschritt 32 beinhaltet die Abschätzung der Zeit, während der der Herd beheizt werden muß, um ihn von der Ausgangstemperatur, beispielsweise Raumtemperatur auf eine Temperatur von Tsoll + ½ x Tmin zu erwärmen. Damit wird die sonst unvermeidbare Anheizspitze umgangen. Außerdem wird die Einschalttemperatur Tein vorausgeschätzt, bei der die Heizung nach dem Ende des ersten Aufheizens abermals eingeschaltet wird. Mit diesem Einschalten wird über den Verfahrensschritt 33 ein Zähler gestartet, der die minimale Einschaltzeit der Heizung überwachen soll. Verfahrensschritt 34 wartet für das erste Aufheizen die geschätzte Zeit ab, wobei nach erfolgtem Aufheizen im Verfahrensschritt 35 die Heizung abgeschaltet wird. Die Verfahrensschritte 36 bis 42 stellen einen geschlossenen Regelkreis dar, der das Regelverhalten für Backofen-Niedrigtemperaturgaren gemäß der Regelkurve Fig. 2 ergibt. Der Verfahrensschritt 36 kennzeichnet das Abwarten bis der Herd auf eine Temperatur Tein abgekühlt ist, wobei anschließend im Verfahrensschritt 39 die Heizung eingeschaltet wird. Die Verfahrensschleife 36, 37, 38 ist dafür geeignet, daß ein fortlaufend neues Abschätzen einer optimalen Einschalttemperatur Tein, bei gleichzeitigem Erkennen einer erreichten maximalen Herdtemperatur erfolgt, wobei stets das Abkühlen auf die Herdtemperatur Tein abgewartet wird. Gleichzeitig kann dabei ein Speichermedium herangezogen werden, was einen Merker für die Einschalttemperatur Tein besitzt, der ständig neu mit optimierten Einschalttemperaturen Tein geladen wird.

Nachdem im Verfahrensschritt 39 die Heizung eingeschalten wurde, wird im Verfahrensschritt 40 auf das Ende der minimalen Heizzeit gewartet, wobei im Verfahrensschritt 41 nach dem erfolgten Ende der minimalen Heizzeit die Heizung ausgeschaltet wird. Über den Verfahrensschritt 42 schließt sich der Regelkreis zu den Verfahrensschritten 36, 37, 38, indem initialisierte Merkerdaten die neue Einschalttemperatur Tein abspeichern und der geschlossene Regelkreis ab Verfahrensschritt 36 einsetzt. Mit Hilfe dieser gemäß Fig. 3 aufgezeigten Verfahrensschritte für eine Regelung der Backofentemperatur bei Niedrigtemperaturgarung ist eine unter Berücksichtigung der Erfahrungen beim Backofenbetrieb optimierte Regelung möglich, wobei die Verfahrensschritte 31 bis 36 in Fuzzy-Logik-Form hardwaremäßig ausgestaltet sein können.

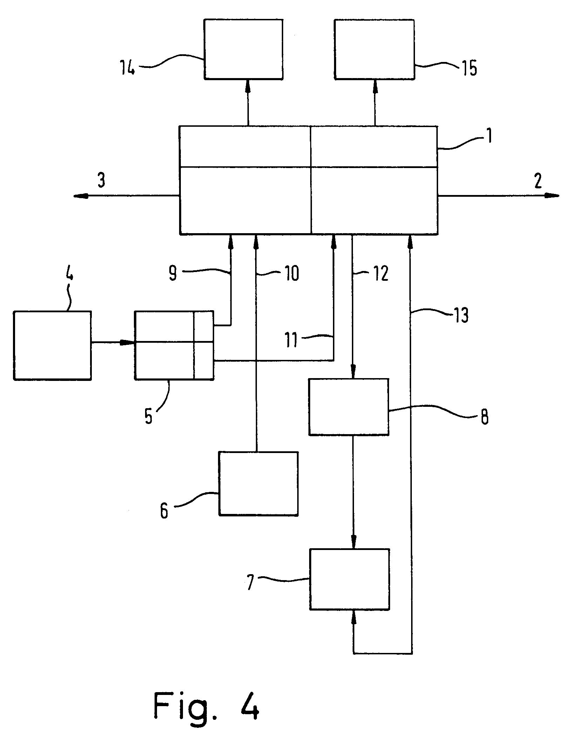

Gemäß Fig. 4 ist eine solche hardwaremäßige Ausgstaltung dargestellt. Die Prinzipschaltung für Niedrigtemperaturgaren besteht aus einer zentralen Steuerung 1, einer Ausgabeeinheit zum Einschalten der Heizung 2, einer Ausgabeeinheit zum Ausschalten der Heizung 3, einer Starteinrichtung zur Temperaturregelung 4, einem Fuzzy-Block 5, einer Temperaturgradienten-Einheit 6, einem Heiztimer 7, einem Zeitzähler 8, Eingangsleitungen für die zentrale Steuerung 9, 10, 11, 13, einer Ausgangsleitung zum Zeitzähler 12, einer Betriebssignal-Ausgabeeinheit 14 und einer Anzeigeeinheit für Ausgabedaten 15. Die gemäß Fig. 4 dargestellte Prinzipschaltung für Niedrigtemperatur-Garen wird durch die Startsignaleinheit 4 in Betrieb gesetzt und über den Fuzzy-Block 5 in Verbindung mit der zentralen Steuerung 1 fuzzygesteuert, wobei die sonst unvermeidbare Anheizspitze ausgependelt wird. Der Fuzzy-Block 5 besitzt eine Erfahrungstabelle und ist ausgangsseitig über die Leitungen 9 und 11 mit der zentralen Steuerung 1 verbunden. Durch den Dateninhalt des Fuzzy-Blockes 5 aktiviert die zentrale Steuerung 1 die Augabeeinheit 2, wobei diese den Garraum eine abgeschätzte Zeit lang auf eine Temperatur von Tsoll + ½ x Tmin aufheizt. Danach schaltet die Ausgabeeinheit 3 der zentralen Steuerung 1 die Heizung ab. Das erstmalige Abschalten der Heizung bedingt eine fuzzygemäße Vorausschätzung der Einschalttemperatur Tein für das zweite Einschalten der Heizung. Dieser Verfahrensschritt wird wie der bereits beschriebene Start der Regelung abgewickelt. Mit dem erfolgten zweiten Einschalten der Heizung wird gleichzeitig der Heizzeitzähler 8 gestartet, der ständig über die zentrale Steuerung 1 bedient wird, mit jeweils für die folgende Heizperiode aktualisierten Heizzeiten. Mit dem Ende des zweiten Heizzeitzyklus wird der zentralen Steuerung 1 durch den Heizzeittimer 7 eine der minimal notwendigen Heizzeit nahekommende Heizzeit über die Busleitung 13 zugestellt. Die minimal notwendige Heizzeit Tmin korreliert mit der Erkennung des die Solltemperatur übersteigenden Temperaturverlaufes, wobei die Temperaturgradienten-Einheit 6 diese Information der zentralen Steuerung 1 über die Busleitung 10 zustellt. Nach mindestens einem Fuzzy-Regelschritt, höchstens jedoch drei solcher Vorgänge, besitzt die zentrale Steuerung 1 die Wertevorräte über die Einschalttemperatur Tein, die minimale Temperaturerhöhung Tmin und die minimale Heizzeitdauer THmin. Damit wird der Regelkreis gemäß den bereits geschilderten Verfahrensschritten 36 bis 42 geschlossen. Die zentrale Steuerung 1 kann zudem über ihren Ausgabebus die Betriebssignal-Ausgabeeinheit 14 und die Anzeigeeinheit für Ausgabedaten 15 bedienen. Die gemäß Fig. 4 dargestellte Prinzipschaltung kann durch einen dafür vorgedachten Prozessor ersetzt werden, wobei durch geschickte Wahl der Hard- und Software ein bereits für andere Steuerungsaufgaben angeordneter Prozessor diese Regelung gemäß den Verfahrensschritten 31 bis 42 mit übernehmen kann.

## Patentansprüche

1. Steuereinrichtung für ein verschließbares Gargerät mit einer Heizeinrichtung zur Beheizung des Garraumes, wobei die Heizeinrichtung mit einer durch einen Temperatursensor gesteuerten Regeleinrichtung für einen festlegbaren Temperaturbereich zusammenwirkt, **dadurch gekennzeichnet**, daß zur Onlineoptimierung eines festlegbaren Garraum-Temperaturbereichs bis zu 100°C,
- die Regeleinrichtung den Einschwingzustand für den Temperaturanfangswert Fuzzy steuert, so daß mit bereits einem Fuzzy-Regelschritt die Anheizspitze vermieden wird,
- die Regeleinrichtung den abgeklungenen Einschwingzustand erkennt und eine auf den ersten Fuzzy-Regelschritt bezogene, optimierte Heizzeit initialisiert,
- die Regeleinrichtung bei minimaler auf den jeweiligen Regelschritt bezogener Heizzeit unter ständiger Überwachung der optimalen Einschalttemperatur für die Garraumheizung aus dem erkannten jeweiligen Temperaturgradienten die minimale Heizzeit für den nächsten Regelschritt aktualisiert und
- daß die Regeleinrichtung über einen geschlossenen Regelkreis die Einschalttemperatur ständig optimiert.

2. Steuereinrichtung nach Anspruch 1, dadurch gekennzeichnet, daß eine Anwahlschaltung (4) mit einem Fuzzy -Steuerblock (5) verbunden ist, wobei der Fuzzy-Steuerblock (5) mit einer zentralten Steuerung (1) korrespondiert, die je nach Einschwingzustand des Temperatur-Anfangswertes die Heizung zu- oder abschaltet.

3. Steuereinrichtung nach Anspruch 1, dadurch gekennzeichnet, daß eine eine Temperatur-Zeitfunktion erkennende Einheit (6) angeordnet ist, die mit der zentralen Steuerung (1) verbunden ist und im Zusammenspiel mit dieser eine Erkennung des Herdtemperatur-Maximums durchführt.

4. Steuereinrichtung nach Anspruch 1, dadurch gekennzeichnet, daß die zentrale Steuerung (1) mit einem Zeitzähler (8) verbunden ist, der ausgangsseitig mit einem Heizzeittimer (7) korrespondiert, wobei der Heizzeittimer (7) ausgangsseitig auf die zentrale Steuerung (1) geführt ist und im Signalwechselspiel die Einschalttemperatur mit jedem Verfahrensschritt optimiert und mit der minimalen Heizzeit korreliert.

5. Steuereinrichtung nach Anspruch 1, dadurch gekennzeichnet, daß die zentrale Steuerung (1) ein Mikroprozessor ist.

6. Steuereinrichtung nach Anspruch 1, dadurch gekennzeichnet, daß die zentrale Stesuerung (1) augangsseitig durch eine Ausgabeeinheit (2) die Garraumheizung einschaltet.

7. Steuereinrichtung nach Anspruch 1, dadurch gekennzeichnet, daß die zentrale Steuerung (1) ausgangsseitig durch eine Ausgabeeinheit (3) die Garraumheizung ausschaltet.

8. Steuereinrichtung nach Anspruch 1, dadurch gekennzeichnet, daß die zentrale Steuerung (1) eine Backofen-Betriebssignal-Ausgabeeinheit (14) aktiviert.

9. Steuereinrichtung nach Anspruch 1, dadurch gekennzeichnet, daß die zentrale Steuerung (1) eine Anzeigeeinheit (15) für Ausgabedaten aktiviert.
